(19) Europäisches Patentamt
European Patent Office
Office européen des brevets

(11) EP 3 176 208 B1

(12) **EUROPEAN PATENT SPECIFICATION**

(45) Date of publication and mention
of the grant of the patent:
**04.08.2021 Bulletin 2021/31**

(51) Int Cl.:
***C08L 9/00*** *(2006.01)*

(21) Application number: **16198901.7**

(22) Date of filing: **15.11.2016**

(54) **PRODUCTION METHOD FOR RUBBER COMPOSITION FOR TIRES**

HERSTELLUNGSVERFAHREN FÜR KAUTSCHUKZUSAMMENSETZUNG FÜR REIFEN

PROCÉDÉ DE PRODUCTION DE COMPOSITION DE CAOUTCHOUC POUR PNEUMATIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.12.2015 JP 2015236722**

(43) Date of publication of application:
**07.06.2017 Bulletin 2017/23**

(73) Proprietor: **Sumitomo Rubber Industries, Ltd.
Chuo-ku
Kobe-shi,
Hyogo 651-0072 (JP)**

(72) Inventor: **FUJIMORI, Daiko
Kobe-shi,, Hyogo 651-0072 (JP)**

(74) Representative: **TBK
Bavariaring 4-6
80336 München (DE)**

(56) References cited:
**EP-A1- 2 947 087          WO-A1-2008/145155
WO-A1-2014/105488**

**Description**

BACKGROUND OF THE INVENTION

Field of the Invention

The present invention relates to a production method for a rubber composition for tires.

Description of the Background Art

Conventionally, for the purpose of improving safety and low fuel consumption performance of a tire, silica is used as a reinforcing filler. In addition, since a sufficient effect is not obtained only with silica, a silane coupling agent that binds silica and a rubber component is used together with silica (see, e.g., Japanese Laid-Open Patent Publication No. 2002-363346).

However, silica has high aggregability, and it is difficult to uniformly disperse silica within rubber even when a silane coupling agent is used. Thus, performance of silica cannot be brought out to the maximum degree.

As described above, it is difficult to uniformly disperse silica within rubber. This tendency is significant, in particular, in the case where a butadiene rubber having a high cis content and a high Mooney viscosity is used.

WO 2008145155 (A1) relates to a tire comprising at least one structural element including a crosslinked elastomeric material obtained by crosslinking a crosslinkable elastomeric composition comprising: (a) 100 phr of at least one solid elastomeric polymer having a Mooney viscosity, measured at 100°C, of from 30 to 90; (b) from 3 phr to 33 phr of at least one liquid elastomeric polymer having a number average molecular weight (Mn) of from 1000 to 20000, and an amount of vinyl unsaturations in the butadiene part, of from 15% to 100%; (c) from 5 phr to 120 phr of at least one silica reinforcing filler; (d) from 0.1 phr to 10 phr of at least one coupling agent containing at least one mercapto group.

WO 2014105488 (A1) relates to a rubber composition, which comprises a polyester resin comprising a copolymer of maleic anhydride or maleic acid and a linear or branched polyol and which may be formed into a tire sidewall component of a tire.

EP2947087 (A1) relates to urea-containing silanes which can be used as coupling reagents in filled rubber mixtures, for example tire treads.

SUMMARY OF THE INVENTION

An object of the present invention is to provide a production method for a rubber composition for tires which solves the above problem and improves the dispersibility of silica and by which a rubber composition for tires that has low fuel consumption performance, wet grip performance, wear resistance, and processability that are improved in a balanced manner is obtained.

The present invention is directed to a production method for a rubber composition for tires, the method including: a base kneading step of kneading a rubber component containing a butadiene rubber having a cis content of not less than 96% by mass and a Mooney viscosity $ML_{1+4}$ (100°C) of not less than 50, silica, a silane coupling agent, and a basic substance; and a finish kneading step of feeding a vulcanizing material to a kneaded product obtained in the base kneading step, and kneading the resultant mixture.

In the base kneading step, the basic substance is preferably fed and kneaded after the rubber component, the silica, and the silane coupling agent are kneaded.

The basic substance is a guanidine.

According to the present invention, since the production method for the rubber composition for tires includes: the base kneading step of kneading the rubber component containing the butadiene rubber having a cis content of not less than 96% by mass and a Mooney viscosity $ML_{1+4}$ (100°C) of not less than 50, the silica, the silane coupling agent, and the basic substance; and the finish kneading step of feeding the vulcanizing material to the kneaded product obtained in the base kneading step, and kneading the resultant mixture, the dispersibility of the silica is improved, and a rubber composition for tires that has low fuel consumption performance, wet grip performance, wear resistance, and processability that are improved in a balanced manner can be provided.

DESCRIPTION OF THE PREFERRED EMBODIMENTS

The production method according to the present invention includes: a base kneading step of kneading a rubber component containing a butadiene rubber (BR) having a cis content of not less than 96% by mass and a Mooney viscosity $ML_{1+4}$ (100°C) of not less than 50, silica, a silane coupling agent, and a basic substance; and a finish kneading step of feeding a vulcanizing material to a kneaded product obtained in the base kneading step, and kneading the resultant mixture.

In the present invention, in the base kneading step, by feeding and kneading the basic substance with the rubber component, the silica, and the silane coupling agent, a reaction between the silica and the silane coupling agent can be accelerated. Accordingly, even in the case where a BR having a high cis content and a high Mooney viscosity like the above BR is used, it is possible to favorably disperse the silica and provide a rubber composition for tires in which low fuel consumption performance, wet grip performance, wear resistance, and processability which are generally difficult to achieve at the same time are improved in a balanced manner.

First, each component used in the present invention will be described.

(Rubber Component)

In the present invention, a BR having a cis content of not less than 96% by mass and a Mooney viscosity $ML_{1+4}$ (100°C) of not less than 50 is used as the rubber component.

For the reason that favorable wet grip performance is achieved, the cis content of the above BR is preferably not less than 97% by mass and more preferably not less than 98% by mass. The upper limit of the cis content is not particularly limited.

The cis content is calculated by infrared absorption spectrum analysis.

For the reason that favorable wet grip performance is achieved, the Mooney viscosity $ML_{1+4}$ (100°C) of the above BR is preferably not less than 60, more preferably not less than 65, and further preferably not less than 70. In addition, for the reason that favorable processability is achieved, the Mooney viscosity $ML_{1+4}$ (100°C) of the above BR is preferably not greater than 150 and more preferably not greater than 120.

The Mooney viscosity $ML_{1+4}$ (100°C) is measured according to JIS K6300:2001-1.

The above BR has a molecular weight distribution (Mw/Mn) of preferably not less than 1.3 and more preferably not less than 1.4. When the molecular weight distribution (Mw/Mn) of the above BR is less than 1.3, there is a possibility that the processability deteriorates. The molecular weight distribution (Mw/Mn) of the above BR is preferably not greater than 5.0, more preferably not greater than 4.0, and further preferably not greater than 3.5. When the molecular weight distribution (Mw/Mn) of the above BR exceeds 5.0, the wear resistance tends to deteriorate.

Mn and Mw are values obtained by conversion based on polystyrene standard, using GPC.

For the reason that low fuel consumption performance, wet grip performance, wear resistance, and processability are achieved in a balanced manner, the amount of the above BR in 100% by mass of the rubber component in the rubber composition obtained by the production method according to the present invention is preferably not less than 40% by mass and more preferably not less than 50% by mass, and is preferably not greater than 85% by mass and more preferably not greater than 75% by mass.

In the present invention, in addition to the above BR, another rubber component may be used. The other rubber component is not particularly limited, but examples thereof include diene rubbers such as natural rubber (NR), epoxidized natural rubber (ENR), isoprene rubber (IR), and butadiene rubber (BR). In addition, a BR other than the above BR can be used. These rubbers may be used solely, or two or more of these rubbers may be used in combination. Among those described above, NR is preferable for the reason that low fuel consumption performance, wet grip performance, wear resistance, and processability are achieved in a balanced manner. NR is not particularly limited, and one that is used generally in the tire industry can be used.

For the reason that low fuel consumption performance, wet grip performance, wear resistance, and processability are achieved in a balanced manner, the amount of NR in 100% by mass of the rubber component in the rubber composition obtained by the production method according to the present invention is preferably not less than 15% by mass and more preferably not less than 25% by mass, and is preferably not greater than 60% by mass and more preferably not greater than 50% by mass.

(Silica)

Examples of the silica include dry-process silica (silicic anhydride) and wet-process silica (hydrous silicic acid), and dry-process silica is preferable for the reason that it has a higher silanol group content.

The silica has a nitrogen adsorption specific surface area ($N_2SA$) of preferably not less than 50 $m^2/g$ and more preferably not less than 100 $m^2/g$. When the $N_2SA$ of the silica is less than 50 $m^2/g$, there is a possibility that sufficient wear resistance is not achieved. The $N_2SA$ of the silica is preferably not greater than 220 $m^2/g$ and more preferably not greater than 200 $m^2/g$. When the $N_2SA$ of the silica exceeds 220 $m^2/g$, there is a possibility that dispersion of the silica in the rubber becomes difficult, so that poor dispersion is caused.

The nitrogen adsorption specific surface area of the silica is a value measured by the BET method according to ASTM D3037-81.

The amount of the silica per 100 parts by mass of the rubber component in the rubber composition obtained by the production method according to the present invention is preferably not less than 40 parts by mass, more preferably not less than 60 parts by mass, and further preferably not less than 70 parts by mass. When the amount of the silica is less than 40 parts by mass, there is a possibility that sufficient low fuel consumption performance is not achieved. The amount of the silica is preferably not greater than 150 parts by mass, more preferably not greater than 120 parts by mass, and further preferably not greater than 100 parts by mass. When the amount of the silica exceeds 150 parts by mass, there is a possibility that dispersion of the silica in the rubber becomes difficult, so that poor dispersion is caused.

(Silane Coupling Agent)

The silane coupling agent is not particularly limited, but examples thereof include sulfide-based silane coupling agents, vinyl-based silane coupling agents, amino-based silane coupling agents, glycidoxy-based silane coupling agents, nitro-based silane coupling agents, and chloro-based silane coupling agents. Among those described above, sulfide-based silane coupling agents are preferable, and bis(3-triethoxysilylpropyl)tetrasulfide is more preferable, for the reason that favorable wear resistance is achieved.

The amount of the silane coupling agent per 100 parts by mass of the silica in the rubber composition obtained by the production method according to the present invention is preferably not less than 1 part by mass, more preferably not less than 3 parts by mass, and further preferably not less than 4 parts by mass. When the amount of the silane coupling agent is less than 1 part by mass, a sufficient effect of decreasing rolling resistance (improvement of low fuel consumption performance) tends not to be obtained. The amount of the silane coupling agent is preferably not greater than 20 parts by mass, more preferably not greater than 15 parts by mass, and further preferably not greater than 12 parts by mass. When the amount of the silane coupling agent exceeds 20 parts by mass, a rolling resistance decrease (low fuel consumption performance improvement) effect corresponding to the added amount of the silane coupling agent which is expensive tends not to be obtained.

(Basic substance)

The basic substance in the present invention is a substance exhibiting basicity.

As the basic substance, guanidines are used for the reason that the effect of accelerating the reaction between the silane coupling agent and the silica is great. Guanidines are substances used also as vulcanization accelerators, and specific examples thereof include 1,3-diphenylguanidine, 1,3-di-o-tolylguanidine, 1-o-tolylbiguanide, the di-o-tolylguanidine salt of dicatechol borate, 1,3-di-o-cumenylguanidine, 1,3-di-o-biphenylguanidine, and 1,3-di-o-cumenyl-2-propionylguanidine. Among those described above, 1,3-diphenylguanidine, 1,3-di-o-tolylguanidine, and 1-o-tolylbiguanide are preferable, and 1,3-diphenylguanidine is more preferable, for the reason that the reactivity is high and the effect of accelerating the reaction between the silane coupling agent and the silica is particularly great.

The amount of the basic substance per 100 parts by mass of the silica in the rubber composition obtained by the production method according to the present invention is preferably not less than 0.5 parts by mass, more preferably not less than 1 part by mass, and further preferably not less than 1.5 parts by mass. When the amount of the basic substance is less than 0.5 parts by mass, there is a possibility that a sufficient effect of accelerating the reaction between the silane coupling agent and the silica is not obtained. The amount of the basic substance is preferably not greater than 15 parts by mass, more preferably not greater than 10 parts by mass, and further preferably not greater than 5 parts by mass. When the amount of the basic substance exceeds 15 parts by mass, there is a possibility that an amount of foreign matter in the rubber becomes large, the rolling resistance increases, and the low fuel consumption performance diminishes.

The amount of the basic substance described here means the amount of the basic substance fed in the base kneading step, and the amount of the basic substance fed in another step, such as a vulcanization accelerator fed in the finish kneading step, is not included.

(Vulcanizing Material)

As the vulcanizing material, for example, sulfur, a vulcanization accelerator, or the like can be used.

The sulfur is not particularly limited, and one that is used generally in the tire industry can be used, but powder sulfur is preferable.

For the reason that low fuel consumption performance, wet grip performance, wear resistance, and processability are achieved in a balanced manner, the amount of the sulfur per 100 parts by mass of the rubber component in the rubber composition obtained by the production method according to the present invention is preferably not less than 0.1 parts by mass and more preferably not less than 0.5 parts by mass, and is preferably not greater than 6 parts by mass and more preferably not greater than 4 parts by mass.

The vulcanization accelerator is not particularly limited, and one that is used generally in the tire industry can be used as the vulcanization accelerator, but examples of the vulcanization accelerator include guanidines, sulfenamides, thiazoles, thiurams, dithiocarbamates, thioureas, and xanthates. These vulcanization accelerators may be used solely, or two or more of these vulcanization accelerators may be used in combination. Among those described above, a guanidine and another vulcanization accelerator are preferably used in combination, and a guanidine and a sulfenamide are more preferably used in combination. Examples and the like of guanidines are the same as described in relation to the basic substance.

For the reason that low fuel consumption performance, wet grip performance, wear resistance, and processability are achieved in a balanced manner, the amount of the vulcanization accelerator per 100 parts by mass of the rubber component in the rubber composition obtained by the production method according to the present invention is preferably not less than 1 part by mass and more preferably not less than 2 parts by mass, and is preferably not greater than 10 parts by mass and more preferably not greater than 8 parts by mass.

The amount of the vulcanization accelerator described here is the total amount of the vulcanization accelerator used in all steps, and in the case where a vulcanization accelerator such as guanidines is used as the basic substance, the amount thereof is also included.

(Other Components)

In the rubber composition obtained by the production method according to the present invention, in addition to the above components, compounding ingredients that are used generally in production of a rubber composition, such as carbon black, oil, an antioxidant, zinc oxide, and stearic acid, may be blended as appropriate.

Next, each kneading step in the production method according to the present invention will be described.

(Base Kneading Step)

In the base kneading step, the rubber component containing the above BR, the silica, the silane coupling agent, and the basic substance are fed and kneaded. The kneading method is not particularly limited, and a known kneading machine such as a Banbury mixer and a kneader can be used. In addition, the kneading time (the entire kneading time in the base kneading step) is preferably 4 to 30 minutes, and the kneading temperature is preferably 130 to 160°C.

In order to bind the silane coupling agent and the silica, a polycondensation reaction between the silane coupling agent and the silica needs to take place after a hydrolysis reaction of the silane coupling agent takes place. Then, the hydrolysis reaction is accelerated by causing the reaction system to be acidic, and the polycondensation reaction is accelerated by causing the reaction system to be basic. The basic substance used in the present invention serves to accelerate the polycondensation reaction. Thus, the basic substance is preferably fed after the hydrolysis reaction proceeds to some extent. From such a standpoint, in the base kneading step, after the rubber component, the silica, and the silane coupling agent are kneaded, the basic substance is preferably fed and kneaded.

The time from start of feeding and kneading the rubber component, the silica, and the silane coupling agent until the basic substance is fed (the time for initially kneading the rubber component, the silica, and the silane coupling agent) is preferably 0.5 to 10 minutes. In addition, the kneading time after the basic substance is fed is preferably 0.5 to 10 minutes.

Each of the rubber component, the silica, the silane coupling agent, and the basic substance may be fed in the whole amount at one time or may be divided and fed several times, but is preferably fed in the whole amount at one time for the reason that the reaction between the silica and the silane coupling agent can be efficiently caused to proceed.

In the base kneading step, at least the rubber component, the silica, the silane coupling agent, and the basic substance only need to be kneaded. However, together with these materials, carbon black, stearic acid, etc. may be kneaded. For the reason that the reaction between the silica and the silane coupling agent can be efficiently caused to proceed, the carbon black and stearic acid are preferably fed and kneaded at the initial stage of kneading the rubber component, the silica, and the silane coupling agent. In addition, in this case, the basic substance is preferably fed after the rubber component, the silica, the silane coupling agent, the carbon black, and stearic acid are kneaded.

(Finish Kneading Step)

In the finish kneading step, the vulcanizing material is fed to the kneaded product obtained in the base kneading step, and the resultant mixture is kneaded. The kneading method is not particularly limited, and a known kneading machine such as an open roll can be used. In addition, the kneading time is preferably 3 to 15 minutes, and the kneading temperature is preferably 40 to 80°C.

In the finish kneading step, at least the kneaded product obtained in the base kneading step, the sulfur, and the vulcanization accelerator only need to be kneaded. However, together with these materials, zinc oxide, an antioxidant, oil, etc. may be kneaded.

(Other Steps)

The kneaded product (unvulcanized rubber composition) obtained in the finish kneading step is extruded into a shape of a component such as a tread, is formed on a tire forming machine by an ordinary method, and is attached together with other tire components, thereby forming an unvulcanized tire. Thereafter, the unvulcanized tire is heated and pressurized within a vulcanizing machine, whereby a tire can be manufactured. The manufactured tire is suitably used as a tire for a passenger car, a tire for a bus, a tire for a truck, or the like.

EXAMPLES

The present invention will be specifically described by means of examples, but the present invention is not limited to these examples.

The following will collectively describe various chemicals used in Examples and Comparative Examples.

NR: TSR
BR1: Buna CB21 (cis content: 98% by mass, $ML_{1+4}$ (100°C): 73, Mw/Mn: 2.4) manufactured by LANXESS.
BR2: Buna CB22 (cis content: 97% by mass, Mooney viscosity ($ML_{1+4}$, 100°C): 63, Mw/Mn: 1.6) manufactured by LANXESS.
BR3: BR1250H (cis content: 42% by mass, Mooney viscosity ($ML_{1+4}$, 100°C): 65.5) manufactured by Zeon Corporation
Silica: Ultrasil VN3 ($N_2SA$: 175 $m^2/g$) manufactured by Evonik Degussa GmbH.
Carbon black: Diablack N220 ($N_2SA$: 114 $m^2/g$) manufactured by Mitsubishi Chemical Corporation.
Silane coupling agent: Si69 (bis(3-triethoxysilylpropyl)tetrasulfide) manufactured by Evonik Degussa GmbH.
Stearic acid: bead stearic acid "Tsubaki" manufactured by NOF Corporation.
Vulcanization accelerator DPG: Nocceler D (1,3-diphenylguanidine) manufactured by Ouchi Shinko Chemical Industrial Co., Ltd.
Zinc oxide: two types of zinc oxide manufactured by Mitsui Mining & Smelting Co., Ltd.
Antioxidant: Nocrac 6C (N-phenyl-N'-(1,3-dimethylbutyl)-p-phenylenediamine) manufactured by Ouchi Shinko Chemical Industrial Co., Ltd.
Oil: X140 manufactured by Japan Energy Corporation.
Vulcanization accelerator CZ: Nocceler NS (N-tert-butyl-2-benzothiazolylsulfenamide) manufactured by Ouchi Shinko Chemical Industrial Co., Ltd.
Sulfur: sulfur 200 mesh, manufactured by Tsurumi Chemical Industry Co., Ltd.

Examples and Comparative Examples

(Base Kneading Step)

The materials described at items of base kneading in Table 1 were kneaded by using a 1.7-L Banbury mixer to obtain a kneaded product. X-1 and X-2 in Table 1 mean that each material at each item was fed and kneaded in the order of X-1 and X-2. The kneading temperature and the kneading time for each item are as follows.

X-1    kneading temperature: 150°C, kneading time: 5 minutes
X-2    kneading temperature: 150°C, kneading time: 5 minutes

(Finish Kneading Step)

The materials described at items of finish kneading in Table 1 were fed to the kneaded product obtained in the base kneading step, and the resultant mixture was kneaded at 70°C for 8 minutes by using an open roll to obtain au unvulcanized rubber composition.

(Vulcanizing Step)

The unvulcanized rubber composition obtained in the finish kneading step was pressed and vulcanized by a 0.5 mm-thick mold at 170°C for 20 minutes to obtain a vulcanized rubber composition.
In addition, the unvulcanized rubber composition obtained in the finish kneading step was extruded into a shape of a tread, and was attached together with other tire components on a tire forming machine to form an unvulcanized tire.

The unvulcanized tire was pressed and vulcanized at 170°C for 20 minutes to obtain a test tire.

The following evaluation was made for the obtained unvulcanized rubber composition, vulcanized rubber composition, and test tire. The results are shown in Table 1.

(Processability Index (Mooney Viscosity))

The Mooney viscosity of the unvulcanized rubber composition was measured at 130°C according to JIS K6300. The results are shown as indexes based on the following calculation formula. A higher index indicates that the Mooney viscosity is lower and the processability is more excellent.

$$(\text{Processability index}) = (\text{ML}_{1+4} \text{ of Comparative Example 1}) / (\text{ML}_{1+4} \text{ with each composition}) \times 100$$

(Rolling Resistance Index)

By using a viscoelastic spectrometer VES (manufactured by Iwamoto Seisakusho), $\tan\delta$ of each vulcanized rubber composition was measured under the conditions of: a temperature of 70°C; an initial strain of 10%; and a dynamic strain of 2%. The results are shown as indexes based on the following calculation formula. A higher rolling resistance index indicates that the low fuel consumption performance is more excellent.

$$(\text{Rolling resistance index}) = (\tan\delta \text{ of Comparative Example 1}) / (\tan\delta \text{ with each composition}) \times 100$$

(Wet Grip Performance Index)

Each test tire was mounted to a front wheel drive vehicle produced in Japan, the vehicle was caused to run on a wet asphalt road surface, and a braking distance from an initial speed of 100 km/h was obtained. The results are shown as indexes based on the following calculation formula. A higher index indicates that the wet grip performance is more excellent.

$$(\text{Wet grip performance index}) = (\text{braking distance of Comparative Example 1}) / (\text{braking distance with each composition}) \times 100$$

(Wear Resistance Index)

Each test tire was mounted to a front wheel drive vehicle produced in Japan. After the vehicle was caused to run for a distance of 8000 km, the groove depth in the tire tread portion was measured, and a running distance at which the tire groove depth was decreased by 1 mm was calculated. The results are shown as indexes based on the following calculation formula. A higher index indicates that the wear resistance is more excellent.

$$(\text{Wear resistance index}) = (\text{running distance, with each composition, at which groove depth was decreased by 1 mm}) / (\text{running distance of Comparative Example 1 at which groove depth was decreased by 1 mm}) \times 100$$

[Table 1]

| | | | | | Comp. Ex. 1 | Ex. 1 | Comp. Ex. 2 | Ex. 2 | Comp. Ex. 3 | Comp. Ex. 4 |
|---|---|---|---|---|---|---|---|---|---|---|
| Blending amount (parts by mass) | Base kneading | X-1 | | NR | 40 | 40 | 40 | 40 | 40 | 40 |
| | | | | BR1 | 60 | 60 | - | - | - | - |
| | | | | BR2 | - | - | 60 | 60 | - | - |
| | | | | BR3 | - | - | - | - | 60 | 60 |
| | | | | Silica | 75 | 75 | 75 | 75 | 75 | 75 |
| | | | | Carbon black | 5 | 5 | 5 | 5 | 5 | 5 |
| | | | | Silane coupling agent | 8 | 8 | 8 | 8 | 8 | 8 |
| | | | | Stearic acid | 2 | 2 | 2 | 2 | 2 | 2 |
| | | X-2 | | Vulcanization accelerator DPG | - | 2.2 | - | 2.2 | - | 2.2 |
| | Finish kneading | | | Zinc oxide | 2 | 2 | 2 | 2 | 2 | 2 |
| | | | | Antioxidant | 2 | 2 | 2 | 2 | 2 | 2 |
| | | | | Oil | 20 | 20 | 20 | 20 | 20 | 20 |
| | | | | Vulcanization accelerator CZ | 1.8 | 1.8 | 1.8 | 1.8 | 1.8 | 1.8 |
| | | | | Vulcanization accelerator DPG | 2.2 | - | 2.2 | - | 2.2 | - |
| | | | | Sulfur | 1.6 | 1.6 | 1.6 | 1.6 | 1.6 | 1.6 |
| Evaluation | | | | Processability index | 100 | 104 | 98 | 103 | 104 | 105 |
| | | | | Rolling resistance index | 100 | 105 | 98 | 104 | 96 | 97 |
| | | | | Wet grip performance index | 100 | 102 | 102 | 107 | 101 | 103 |
| | | | | Wear resistance index | 100 | 104 | 102 | 105 | 97 | 98 |

From Table 1, it was found that the Examples obtained by the production method including the base kneading step of kneading the rubber component containing the BR (BR1, 2) having a cis content of not less than 96% by mass and a Mooney viscosity $ML_{1+4}$ (100°C) of not less than 50, the silica, the silane coupling agent, and the basic substance (vulcanization accelerator DPG) and the finish kneading step of feeding the vulcanizing material to the kneaded product obtained in the base kneading step and kneading the resultant mixture have low fuel consumption performance, wet grip performance, wear resistance, and processability that are improved in a balanced manner. In addition, it was found that in the case where the BR (BR 3) having a cis content that is outside the above range is used, even when the basic substance is kneaded in the base kneading step, the performance improvement effect is small.

## Claims

1. A production method for a rubber composition for tires, the method comprising:

    a base kneading step of kneading a rubber component containing a butadiene rubber having a cis content of not less than 96% by mass and a Mooney viscosity $ML_{1+4}$ (100°C) of not less than 50, silica, a silane coupling agent, and a basic substance; and
    a finish kneading step of feeding a vulcanizing material to a kneaded product obtained in the base kneading step, and kneading the resultant mixture,
    wherein the basic substance is a guanidine.

2. The production method for the rubber composition for tires according to claim 1, wherein in the base kneading step, the basic substance is fed and kneaded after the rubber component, the silica, and the silane coupling agent are kneaded.

## Patentansprüche

1. Herstellungsverfahren für eine Kautschukzusammensetzung für Reifen, wobei das Verfahren umfasst:

einen Basisknetschritt des Knetens einer Kautschukkomponente, die einen Butadienkautschuk mit einem cis-Gehalt von nicht weniger als 96 Massen-% und einer Mooney-Viskosität $ML_{1+4}$ (100°C) von nicht weniger als 50, Siliciumdioxid, ein Silankupplungsmittel und eine basische Substanz enthält; und
einen Endknetschritt des Zuführens eines Vulkanisiermaterials zu einem gekneteten Produkt, das in dem Basisknetschritt erhalten wurde, und des Knetens der resultierenden Mischung,
wobei die basische Substanz ein Guanidin ist.

2. Herstellungsverfahren für die Kautschukzusammensetzung für Reifen nach Anspruch 1, wobei in dem Basisknetschritt die basische Substanz zugeführt und geknetet wird, nachdem die Kautschukkomponente, das Siliciumdioxid und das Silankopplungsmittel geknetet wurden.

**Revendications**

1. Procédé de production d'une composition de caoutchouc pour pneus, le procédé comprenant :

une étape de malaxage de base consistant à malaxer un composant caoutchouc contenant un caoutchouc de butadiène ayant une teneur en cis non inférieure à 96 % en masse et une viscosité Mooney $ML_{1+4}$ (100°C) non inférieure à 50, de la silice, un agent de couplage au silane, et une substance basique ; et
une étape de malaxage de finition consistant à introduire un matériau de vulcanisation dans un produit malaxé obtenu dans l'étape de malaxage de base, et à malaxer le mélange résultant,
dans lequel la substance basique est une guanidine.

2. Procédé de production d'une composition de caoutchouc pour pneus selon la revendication 1, dans lequel, dans l'étape de malaxage de base, la substance basique est introduite et malaxée après que le composant caoutchouc, la silice et l'agent de couplage au silane ont été malaxés.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002363346 A
- WO 2008145155 A1
- WO 2014105488 A1
- EP 2947087 A1